# DEMANDE DE BREVET EUROPEEN

(11) **EP 1 571 555 A2**
(43) Date de publication de la demande: **07.09.2005**
(21) Numéro de dépôt: 04364079.6
(22) Date de dépôt: 20.12.2004
(51) Int. Cl.: G06F 12/04

(54) **Procédé et dispositif d'accès à un triplet de mots de n bits consécutifs au sein d'un espace mémoire, et micro-contròleur comprenant un tel dispositif**

(30) Priorité: 24.12.2003 FR 0315439
(71) Demandeur: ATMEL NANTES SA, 44306 Nantes Cédex 2 (FR)
(72) Inventeur: Garnier, Sylvain, 44000 Nantes (FR)
(74) Mandataire: Guéné, Patrick Lucien Juan Joseph

(57) **Abrégé**

L'invention concerne un procédé d'accès, au sein d'un espace mémoire, à un triplet de mots de n bits consécutifs. Selon l'invention, le procédé comprend : une phase préalable (I) de distribution modulo 2 d'une séquence de mots de n bits dans une première et une seconde mémoires (R0, R1) en commençant par la première mémoire, les première et seconde mémoires étant organisées chacune en mots de 2*n bits avec un pas d'adressage de 2*n bits et contenant chacune deux colonnes de mots de n bits ; une phase (II) d'accès audit triplet de mots de n bits, comprenant : une étape (31) de lecture simultanée d'un couple de mots de n bits dans chacune des première et seconde mémoires, en fonction de l'adresse du premier mot du triplet au sein de la première ou seconde mémoire ; une étape (32) d'extraction de trois mots consécutifs parmi les quatre mots de n bits contenus dans les deux couples de mots de n bits lus, en fonction de la colonne dans laquelle se trouve le premier mot du triplet au sein de la première ou seconde mémoire.

## Description

Le domaine de l'invention est celui de l'accès à des données stockées en mémoire, typiquement en mémoire ROM (mémoire non volatile).

Plus précisément, l'invention concerne un procédé et un dispositif d'accès à un triplet de mots de n bits consécutifs au sein d'un espace mémoire.

L'invention a de nombreuses applications, telles que par exemple l'accès par un microcontrôleur à une instruction composée au plus de trois mots de n bits.

On rappelle en effet qu'un micro-contrôleur n bits (par exemple, n = 8) exécute des instructions composées chacune de un à trois mots de n bits stockées consécutivement dans un espace mémoire. Pour minimiser le temps d'exécution d'une instruction, il est souhaitable de réduire le temps d'accès par le micro-contrôleur, en mémoire ROM, à ce triplet de mots de n bits qui composent l'instruction. Or, il n'existe pas à ce jour de technique permettant d'accéder à un triplet de mots de n bits en un seul accès à la mémoire ROM.

Plus généralement, la présente invention peut s'appliquer dans tous les cas où l'on souhaite accéder à n'importe quel triplet de mots de n bits (données), sachant que le premier mot est situé à une adresse demandée, et les deux autres mots sont consécutifs au premier mot.

L'invention a notamment pour objectif de fournir un procédé et un dispositif permettant d'accéder à un triplet de mots de n bits consécutifs, au sein d'un espace mémoire, en un seul accès.

L'invention a également pour objectif de fournir de tels procédé et dispositif qui soient simples à mettre en oeuvre et peu coûteux.

Ces différents objectifs, ainsi que d'autres qui apparaîtront par la suite, sont atteints selon l'invention à l'aide d'un procédé d'accès, au sein d'un espace mémoire, à un triplet de mots de n bits consécutifs, ledit procédé comprenant :
- une phase préalable de distribution modulo 2 d'une séquence de mots de n bits dans une première et une seconde mémoires en commençant par la première mémoire, les première et seconde mémoires étant organisées chacune en mots de 2*n bits avec un pas d'adressage de 2*n bits et contenant chacune deux colonnes de mots de n bits ;
- une phase d'accès audit triplet de mots de n bits, comprenant :
   * une étape de lecture simultanée d'un couple de mots de n bits dans chacune des première et seconde mémoires, en fonction de l'adresse du premier mot du triplet au sein de la première ou seconde mémoire ;
   * une étape d'extraction de trois mots consécutifs parmi les quatre mots de n bits contenus dans les deux couples de mots de n bits lus, en fonction de la colonne dans laquelle se trouve le premier mot du triplet au sein de la première ou seconde mémoire.

Le principe général de l'invention consiste donc à émuler une mémoire organisée en mots de 3*n bits avec un pas d'adressage de n bits. On utilise pour ceci deux mémoires organisées chacune en mots de 2*n bits, avec un pas d'adressage de 2*n bits. On lit simultanément dans ces deux mémoires et on réorganise les données lues (à savoir deux mots de 2*n bits chacun) de façon à en extraire les trois mots de n bits formant le triplet recherché, parmi les quatre mots de n bits contenus dans les deux mots de 2*n bits lus.

Il est important de noter que la phase d'accès du procédé selon l'invention ne nécessite qu'un seul accès, simultané, à chacune des deux mémoires. Ainsi, on optimise le temps d'accès au triplet de mots de n bits.

Dans un mode de réalisation préférentiel de l'invention, les deux colonnes de mots de n bits contenues dans chacune des première et seconde mémoires sont appelées colonne de gauche et colonne de droite, en ce que l'étape de lecture comprend elle-même les étapes suivantes :
- fourniture d'un vecteur d'adresse du premier mot du triplet, ledit vecteur d'adresse comprenant :
   * un bit de sélection de mémoire, permettant de sélectionner celle des première et seconde mémoires qui contient le premier mot ;
   * un bit de sélection de colonne, permettant de sélectionner celle des deux colonnes de la mémoire sélectionnée qui contient le premier mot ;
   * un sous-vecteur d'adresse, permettant de sélectionner une sous-adresse, au sein de la mémoire sélectionnée, d'un couple de mots de n bits qui contient le premier mot de n bits ;
- lecture simultanée de :
   * un premier couple de mots de n bits, qui contient le premier mot de n bits, dans la mémoire sélectionnée et à la sous-adresse sélectionnée ;
   * un second couple de mots de n bits, dans la mémoire autre que celle sélectionnée et à la sous-adresse sélectionnée, si la première mémoire est sélectionnée, ou à la sous-adresse sélectionnée incrémentée d'une unité, si la seconde mémoire est sélectionnée ;

L'étape d'extraction consiste à conserver :
- les deux mots du premier couple de mots de n bits lu et le premier mot du second couple de mots de n bits lu, si la colonne de gauche est sélectionnée, ou
- le second mot du premier couple de mots de n bits lu et les deux mots du second couple de mots de n bits lu, si la colonne de droite est sélectionnée.

L'incrémentation d'une unité de la sous-adresse, dans le cas où la seconde mémoire est sélectionnée (c'est-à-dire comprend le premier mot du triplet), correspond à un changement de ligne dans la première mémoire, de façon à assurer une continuité dans les données lues (les mots lus dans la première mémoire devant dans ce cas suivre les mots lus dans la seconde mémoire).

De façon avantageuse, la phase d'accès au triplet de mots de n bits est suivie d'une phase de filtrage du triplet de mots de n bits, consistant à conserver :
- le premier des trois mots dudit triplet ; ou
- le premier et le second des trois mots dudit triplet ; ou
- les trois mots dudit triplet.

Dans un mode de réalisation particulier de l'invention, les mots de n bits sont des octets.

L'invention concerne également un dispositif d'accès, au sein d'un espace mémoire, à un triplet de mots de n bits consécutifs. Selon l'invention, ce dispositif comprend :
- de première et seconde mémoires organisées chacune en mots de 2*n bits avec un pas d'adressage de 2*n bits, et contenant chacune deux colonnes de mots de n bits, une séquence de mots de n bits étant distribuée de façon modulo 2 dans les première et seconde mémoires en commençant par la première mémoire ;
- des moyens d'accès audit triplet de mots de n bits, comprenant :
   * des moyens de lecture simultanée d'un couple de mots de n bits dans chacune des première et seconde mémoires, en fonction de l'adresse du premier mot du triplet au sein de la première ou seconde mémoire ;
   * des moyens d'extraction de trois mots consécutifs parmi les quatre mots de n bits contenus dans les deux couples de mots de n bits lus, en fonction de la colonne dans laquelle se trouve le premier mot du triplet au sein de la première ou seconde mémoire.

L'invention concerne aussi un microcontrôleur comprenant un dispositif d'accès tel que précité, ledit triplet de mots de n bits consécutifs contenant une instruction.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma bloc fonctionnel d'un mode de réalisation particulier du dispositif selon l'invention ;
- la figure 2 présente un exemple de vecteur d'adresse du premier mot du triplet, fourni au dispositif d'accès de la figure 1 ;
- la figure 3 présente un organigramme d'un mode de réalisation particulier du procédé selon l'invention.

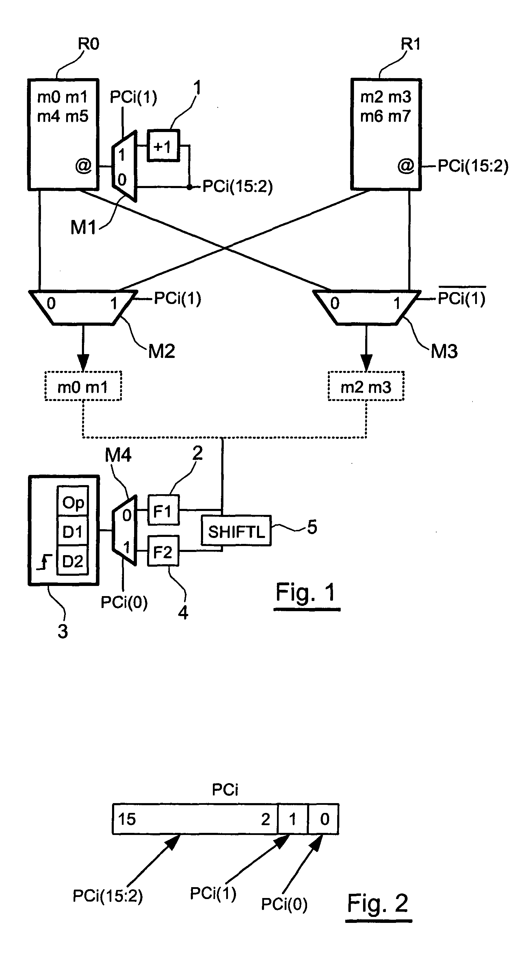

On présente maintenant, en relation avec le schéma bloc de la figure 1. un mode de réalisation particulier du dispositif selon l'invention.

Le dispositif selon l'invention comprend deux mémoires non volatiles R0 et R1, par exemple de type ROM. Chacune est organisée en mots de 2*n bits avec un pas d'adressage de 2*n bits. Chacune contient deux colonnes de mots de n bits, appelées ci-après colonne de gauche et colonne de droite. Chaque ligne de la première ou seconde mémoire contient donc un couple de mots de n bits (c'est-à-dire un mot de 2*n bits), le premier mot du couple étant placé dans la colonne de gauche de la première ou seconde mémoire, et le second mot du couple dans la colonne de droite.

Une séquence de mots de n bits est distribuée de façon modulo 2 dans les première et seconde mémoires en commençant par la première mémoire.

Dans l'exemple illustré sur la figure 1, la séquence de mots de n bits à stocker est notée m0, m1, m2, m3, m4, m5, m6, m7, etc.

La première mémoire R0 stocke les couples (m_{(k*4)}, m_{(k*4)+1}), avec k appartenant à l'ensemble des entiers naturels positifs y compris zéro, c'est-à-dire les couples (m0, m1), (m4, m5), etc. Les mots m_{(k*4)} sont ici placés dans la colonne de gauche de la première mémoire R0. Les mots m_{(k*4)+1} sont ici placés dans la colonne de droite de la première mémoire R0.

La seconde mémoire R1 stocke les couples (m_{(k*4)+2}, m_{(k*4+3}), avec k appartenant à l'ensemble des entiers naturels positifs y compris zéro, c'est-à-dire les couples (m2, m3), (m6, m7), etc. Les mots m_{(k*4)+2} sont ici placés dans la colonne de gauche de la seconde mémoire R1. Les mots m_{(k*4)+3} sont ici placés dans la colonne de droite de la seconde mémoire R1.

Le dispositif selon l'invention comprend par ailleurs des moyens d'accès à un triplet quelconque de mots de n bits, comprenant :
- des moyens de lecture simultanée d'un couple de mots de n bits dans chacune des première et seconde mémoires R0 et R1, en fonction de l'adresse du premier mot du triplet au sein de la première ou seconde mémoire ;
- des moyens d'extraction de trois mots consécutifs parmi les quatre mots de n bits contenus dans les deux couples de mots de n bits lus, en fonction de la colonne (gauche ou droite) dans laquelle se trouve le premier mot du triplet au sein de la première ou seconde mémoire.

On décrit maintenant en détail ces moyens de lecture et d'extraction.

Les moyens de lecture reçoivent un vecteur d'adresse du premier mot du triplet. Ce vecteur d'adresse comprend :
- un bit de sélection de mémoire, permettant de sélectionner celle des première et seconde mémoires qui contient le premier mot du triplet ;
- un bit de sélection de colonne, permettant de sélectionner celle des deux colonnes de la mémoire sélectionnée qui contient le premier mot du triplet ;
- un sous-vecteur d'adresse, permettant de sélectionner une sous-adresse, au sein de la mémoire sélectionnée, d'un couple de mots de n bits qui contient le premier mot du triplet.

La présente invention s'applique quelle que soit la taille du sous-vecteur d'adresse.

Dans l'exemple illustré sur la **figure 2**, le vecteur d'adresse est noté PCi (voir description ci-après de l'application particulière de l'invention dans un micro-contrôleur). Le premier bit, noté PCi(0), est le bit de sélection de colonne. Le deuxième bit, noté PCi(1), est le bit de sélection de mémoire. Les bits suivants, notés PCi(15:2), constituent le sous-vecteur d'adresse (qui comprend 14 bits dans cet exemple).

Les moyens de lecture simultanée comprennent trois multiplexeurs M1, M2 et M3. La première mémoire R0 est adressée par la sortie du premier de ces multiplexeurs M1. La seconde mémoire R1 est adressée par le sous-vecteur d'adresse PCi(15:2).

Le premier multiplexeur M1 possède une première entrée recevant le sous-vecteur d'adresse PCi(15:2) et une deuxième entrée recevant le sous-vecteur d'adresse incrémenté d'une unité (grâce à des moyens d'incrémentation référencés 1). La sortie du premier multiplexeur M1 est reliée à sa première, respectivement deuxième, entrée si la valeur du bit de sélection de mémoire PCi(1) indique que la première, respectivement seconde, mémoire contient le premier mot du triplet. Dans l'exemple illustré, PCi(1) est égal à 0 si la première mémoire contient le premier mot du triplet, et à 1 si c'est la seconde mémoire.

La première mémoire R0 est lue en fonction du sous-vecteur d'adresse PCi(15:2), éventuellement incrémenté d'une unité, avec lequel elle est adressée. La seconde mémoire R1 est lue en fonction du même sous-vecteur d'adresse PCi(15:2) avec lequel elle est également adressée.

Le deuxième multiplexeur M2 possède une première entrée recevant le couple de mots de n bits (par exemple (m0, m1) ou (m4, m5)) lu dans la première mémoire R0 et une deuxième entrée recevant le couple de mots de n bits (par exemple (m2, m3) ou (m6, m7)) lu dans la seconde mémoire R1. La sortie du deuxième multiplexeur M2 est reliée à sa première, respectivement deuxième, entrée si la valeur du bit de sélection de mémoire PCi(1) indique que la première, respectivement seconde, mémoire contient le premier mot du triplet. Le couple de mots de n bits présent en sortie du deuxième multiplexeur M2 est appelé ci-après « premier couple de mots de n bits ».

Le troisième multiplexeur M3 possède une première entrée recevant le couple de mots de n bits (par exemple (m0, m1) ou (m4, m5)) lu dans la première mémoire R0 et une deuxième entrée recevant le couple de mots de n bits (par exemple (m2, m3) ou (m6, m7)) lu dans la seconde mémoire R1. La sortie du troisième multiplexeur M3 est reliée à sa deuxième, respectivement première, entrée si la valeur du bit de sélection de mémoire PCi(1) indique que la première, respectivement seconde, mémoire contient le premier mot du triplet. Le couple de mots de n bits présent en sortie du troisième multiplexeur M3 est appelé ci-après « second couple de mots de n bits ».

Les moyens de lecture simultanée permettent donc de lire un premier et un second couple de mots de n bits. Le premier couple de mots de n bits, qui contient le premier mot de n bits, est lu dans la mémoire sélectionnée par PCi(1) et à la sous-adresse sélectionnée par PCi(15 :2). Le second couple de mots de n bits est lu dans la mémoire autre que celle sélectionnée par PCi(1) et à la sous-adresse sélectionnée par PCi(15:2), si la première mémoire est sélectionnée par PCi(1), ou à la sous-adresse sélectionnée par PCi(15 :2) et incrémentée d'une unité, si la seconde mémoire est sélectionnée par PCi(1).

Ainsi, dans l'exemple illustré sur la figure 1, on suppose que l'on souhaite accéder au triplet (m1, m2, m3). Le bit de sélection de mémoire PCi(1) est égal à 0 pour indiquer que le premier mot m(1) du triplet est stocké dans la première mémoire R0. Comme représenté en pointillés sur la figure 1, le premier couple de mots lu est (m0, m1) et le second couple de mots lu est (m2, m3). Un premier ensemble de quatre mots de n bits est donc contenu dans les premier et second couples de mots de n bits lus.

Les moyens d'extraction comprennent :
- des premiers moyens de fenêtrage (F1) 2, permettant de ne conserver que les trois premiers mots du premier ensemble de quatre mots précité ;
- des moyens de décalage (SHIFTL) 5, permettant de décaler à gauche d'un mot de n bits le premier ensemble de quatre mots précité ;
- des seconds moyens de fenêtrage (F2) 4, permettant de ne conserver que les trois premiers mots de l'ensemble de mots présent en sortie des moyens de décalage (SHIFTL) 5, c'est-à-dire les trois derniers mots du premier ensemble de quatre mots précité ;
- un quatrième multiplexeur M4, possédant une première entrée connectée à la sortie des premiers moyens de fenêtrage (F1) 2 (et recevant donc les trois premiers mots du premier ensemble de quatre mots précité) et une deuxième entrée connectée à la sortie des seconds moyens de fenêtrage (F2) 4 (et recevant donc les trois derniers mots du premier ensemble de quatre mots précité). La sortie du quatrième multiplexeur est reliée à sa première, respectivement deuxième, entrée si la valeur du bit de sélection de colonne PCi(0) indique que la colonne de gauche, respectivement droite, contient le premier mot du triplet ;
- un banc de registre 3 permettant de conserver les trois mots présents en sortie du quatrième multiplexeur, de façon à former le triplet de mots de n bits.

Ainsi, dans l'exemple précité, le premier ensemble de quatre mots de n bits contient les mots m0, m1, m2 et m3. On a le triplet de mots (m0, m1 m2) en sortie des premiers moyens de fenêtrage (F1) 2 et le triplet de mots (m1, m2 et m3) en sortie des seconds moyens de fenêtrage (F2) 4.

Le bit de sélection de colonne PCi(0) est égal à 1 pour indiquer que le premier mot m1 du triplet est stocké dans la colonne de droite de la mémoire sélectionnée (ici la première mémoire R0). Le triplet de mots (m0, m1, m2) en sortie des premiers moyens de fenêtrage (F1) 2 est donc également présent en sortie du quatrième multiplexeur M4, ainsi qu'en sortie du banc de registre 3, et constitue le triplet recherché.

Optionnellement, le dispositif comprend en outre des moyens (non représentés) de filtrage du triplet de mots de n bits, permettant de conserver le premier des trois mots du triplet, le premier et le second des trois mots du triplet, ou encore les trois mots du triplet. En d'autres termes, on lit toujours un triplet de mots de n bits, et on utilise ce triplet entièrement ou seulement en partie en fonction des besoins.

Le dispositif selon l'invention présenté ci-dessus est par exemple compris dans un micro-contrôleur, et plus précisément dans la partie de celui-ci effectuant le contrôle de mémoire code (par exemple une mémoire ROM). Dans ce cas, on utilise par exemple deux mémoires R0 et R1 organisées chacune en mots de 16 bits (2 octets) avec un pas d'adressage de 16 bits (c'est-à-dire, avec n = 8). Le vecteur d'adresse PCi (pour « Program Counter i » en anglais) contient dans ce cas l'adresse d'une instruction à aller chercher en mémoire et à placer dans le banc de registre 3, en vue de son exécution par le micro-contrôleur. Le vecteur d'adresse PCi est par exemple codé sur 16 bits, dont 14 bits pour le sous-vecteur d'adresse PCi(15:2), de façon à définir un espace mémoire total de 64 Koctets (32 Koctets pour chacune des mémoires R0 et R1).

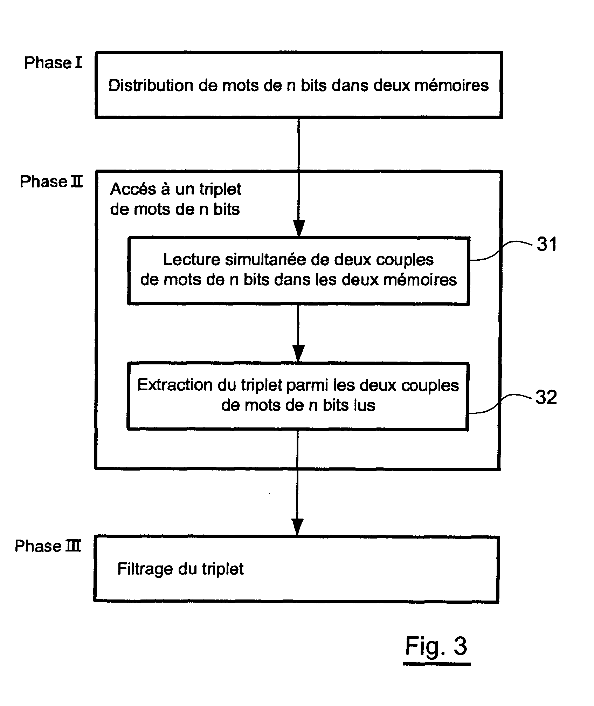

On présente maintenant, en relation avec l'organigramme de la **figure 3**, un mode de réalisation particulier du procédé selon l'invention, explicitant le fonctionnement du dispositif selon l'invention présenté ci-dessus en relation avec les figures 1 et 2. On peut distinguer trois phases.

La première phase (I) est une phase préalable de distribution modulo 2 de la séquence de mots de n bits dans les première et seconde mémoires R0 et R1, en commençant par la première mémoire R0.

La deuxième phase (II) est une phase d'accès à un triplet quelconque de mots de n bits ((m1, m2, m3) dans l'exemple précité). Elle comprend :
- une étape (31) de lecture simultanée d'un couple de mots de n bits dans chacune des première et seconde mémoires, en fonction de l'adresse du premier mot du triplet au sein de la première ou seconde mémoire ;
- une étape (32) d'extraction de trois mots consécutifs parmi les quatre mots de n bits contenus dans les deux couples de mots de n bits lus, en fonction de la colonne (droite ou gauche) dans laquelle se trouve le premier mot du triplet au sein de la première ou seconde mémoire.

La troisième phase (III), optionnelle, est une phase de filtrage du triplet de mots de n bits, de façon à conserver le premier des trois mots du triplet, le premier et le second des trois mots du triplet, ou encore les trois mots du triplet.

## Revendications

1. Procédé d'accès, au sein d'un espace mémoire, à un triplet de mots de n bits consécutifs, **caractérisé en ce qu'**il comprend :
- une phase préalable (I) de distribution modulo 2 d'une séquence de mots de n bits dans une première et une seconde mémoires (R0, R1) en commençant par la première mémoire, les première et seconde mémoires étant organisées chacune en mots de 2*n bits avec un pas d'adressage de 2*n bits et contenant chacune deux colonnes de mots de n bits ;
- une phase (II) d'accès audit triplet de mots de n bits, comprenant :
* une étape (31) de lecture simultanée d'un couple de mots de n bits dans chacune des première et seconde mémoires, en fonction de l'adresse du premier mot du triplet au sein de la première ou seconde mémoire ;
* une étape (32) d'extraction de trois mots consécutifs parmi les quatre mots de n bits contenus dans les deux couples de mots de n bits lus, en fonction de la colonne dans laquelle se trouve le premier mot du triplet au sein de la première ou seconde mémoire.

2. Procédé selon la revendication 1, **caractérisé en ce que** les deux colonnes de mots de n bits contenues dans chacune des première et seconde mémoires sont appelées colonne de gauche et colonne de droite, **en ce que** l'étape de lecture comprend elle-même les étapes suivantes :
- fourniture d'un vecteur d'adresse (PCi) du premier mot du triplet, ledit vecteur d'adresse comprenant :
* un bit de sélection de mémoire (PCi(1)), permettant de sélectionner celle des première et seconde mémoires qui contient le premier mot ;
* un bit de sélection de colonne (PCi(0)), permettant de sélectionner celle des deux colonnes de la mémoire sélectionnée qui contient le premier mot ;
* un sous-vecteur d'adresse (PCi(15 :2)), permettant de sélectionner une sous-adresse, au sein de la mémoire sélectionnée, d'un couple de mots de n bits qui contient le premier mot de n bits;
- lecture simultanée de :
* un premier couple de mots de n bits, qui contient le premier mot de n bits, dans la mémoire sélectionnée et à la sous-adresse sélectionnée ;
* un second couple de mots de n bits, dans la mémoire autre que celle sélectionnée et à la sous-adresse sélectionnée, si la première mémoire est sélectionnée, ou à la sous-adresse sélectionnée incrémentée d'une unité, si la seconde mémoire est sélectionnée ;
et **en ce que** l'étape d'extraction consiste à conserver :
- les deux mots du premier couple de mots de n bits lu et le premier mot du second couple de mots de n bits lu, si la colonne de gauche est sélectionnée, ou
- le second mot du premier couple de mots de n bits lu et les deux mots du second couple de mots de n bits lu, si la colonne de droite est sélectionnée.

3. Procédé selon l'une quelconque des revendications 1 et 2, **caractérisé en ce que** la phase d'accès au triplet de mots de n bits est suivie d'une phase de filtrage du triplet de mots de n bits, consistant à conserver :
- le premier des trois mots dudit triplet ; ou
- le premier et le second des trois mots dudit triplet ; ou
- les trois mots dudit triplet.

4. Procédé selon l'une quelconque des revendications 1 à 3, **caractérisé en ce que** les mots de n bits sont des octets.

5. Dispositif d'accès, au sein d'un espace mémoire, à un triplet de mots de n bits consécutifs, **caractérisé en ce qu'**il comprend :
- de première et seconde mémoires (R0, R1) organisées chacune en mots de 2*n bits avec un pas d'adressage de 2*n bits, et contenant chacune deux colonnes de mots de n bits, une séquence de mots de n bits étant distribuée de façon modulo 2 dans les première et seconde mémoires en commençant par la première mémoire ;
- des moyens d'accès audit triplet de mots de n bits, comprenant :
* des moyens (1, M1, M2, M3) de lecture simultanée d'un couple de mots de n bits dans chacune des première et seconde mémoires, en fonction de l'adresse du premier mot du triplet au sein de la première ou seconde mémoire ;
* des moyens (2, 3, 4, 5, M4) d'extraction de trois mots consécutifs parmi les quatre mots de n bits contenus dans les deux couples de mots de n bits lus, en fonction de la colonne dans laquelle se trouve le premier mot du triplet au sein de la première ou seconde mémoire.

6. Dispositif selon la revendication 5, **caractérisé en ce que** les deux colonnes de mots de n bits contenues dans chacune des première et seconde mémoires sont appelées colonne de gauche et colonne de droite, **en ce que** les moyens de lecture comprennent eux-mêmes :
- des moyens de réception d'un vecteur d'adresse du premier mot du triplet, ledit vecteur d'adresse comprenant :
* un bit de sélection de mémoire, permettant de sélectionner celle des première et seconde mémoires qui contient le premier mot ;
* un bit de sélection de colonne, permettant de sélectionner celle des deux colonnes de la mémoire sélectionnée qui contient le premier mot ;
* un sous-vecteur d'adresse, permettant de sélectionner une sous-adresse, au sein de la mémoire sélectionnée, d'un couple de mots de n bits qui contient le premier mot de n bits ;
- des moyens de lecture simultanée de :
* un premier couple de mots de n bits, qui contient le premier mot de n bits, dans la mémoire sélectionnée et à la sous-adresse sélectionnée ;
* un second couple de mots de n bits, dans la mémoire autre que celle sélectionnée et à la sous-adresse sélectionnée, si la première mémoire est sélectionnée, ou à la sous-adresse sélectionnée incrémentée d'une unité, si la seconde mémoire est sélectionnée ;
et **en ce que** les moyens d'extraction comprennent des moyens permettant de conserver :
- les deux mots du premier couple de mots de n bits lu et le premier mot du second couple de mots de n bits lu, si la colonne de gauche est sélectionnée, ou
- le second mot du premier couple de mots de n bits lu et les deux mots du second couple de mots de n bits lu, si la colonne de droite est sélectionnée.

7. Dispositif selon la revendication 6, **caractérisé en ce que** la seconde mémoire est adressée par le sous-vecteur d'adresse et **en ce que** les moyens de lecture simultanée comprennent :
- un premier multiplexeur (M1), possédant une première entrée recevant le sous-vecteur d'adresse et une deuxième entrée recevant le sous-vecteur d'adresse incrémenté d'une unité, la sortie du premier multiplexeur étant reliée à la première, respectivement deuxième, entrée si la valeur du bit de sélection de mémoire indique que la première, respectivement seconde, mémoire contient le premier mot du triplet, la première mémoire étant adressée par la sortie du premier multiplexeur ;
- un deuxième multiplexeur (M2), possédant une première entrée recevant le couple de mots de n bits lu dans la première mémoire et une deuxième entrée recevant le couple de mots de n bits lu dans la seconde mémoire, la sortie du deuxième multiplexeur étant reliée à la première, respectivement deuxième, entrée si la valeur du bit de sélection de mémoire indique que la première, respectivement seconde, mémoire contient le premier mot du triplet, le couple de mots de n bits présent en sortie du deuxième multiplexeur étant ledit premier couple de mots de n bits ;
- un troisième multiplexeur (M3), possédant une première entrée recevant le couple de mots de n bits lu dans la première mémoire et une deuxième entrée recevant le couple de mots de n bits lu dans la seconde mémoire, la sortie du troisième multiplexeur étant reliée à la deuxième, respectivement première, entrée si la valeur du bit de sélection de mémoire indique que la première, respectivement seconde, mémoire contient le premier mot du triplet, le couple de mots de n bits présent en sortie du troisième multiplexeur étant ledit second couple de mots de n bits.

8. Dispositif selon l'une quelconque des revendications 6 et 7, **caractérisé en ce que** les moyens d'extraction comprennent :
- des premiers moyens de fenêtrage (2), permettant de ne conserver que les trois premiers mots d'un premier ensemble de quatre mots de n bits contenus dans les premier et second couples de mots de n bits lus ;
- des moyens de décalage (5), permettant de décaler à gauche d'un mot de n bits ledit premier ensemble de quatre mots ;
- des seconds moyens de fenêtrage (4), permettant de ne conserver que les trois premiers mots de l'ensemble de mots présent en sortie des moyens de décalage (5), c'est-à-dire les trois derniers mots dudit premier ensemble de quatre mots ;
- un quatrième multiplexeur (M4), possédant une première entrée connectée à la sortie des premiers moyens de fenêtrage (2) et recevant les trois premiers mots dudit premier ensemble de quatre mots, et une deuxième entrée connectée à la sortie des seconds moyens de fenêtrage (4) et recevant les trois derniers mots dudit premier ensemble de quatre mots ; la sortie du quatrième multiplexeur étant reliée à sa première, respectivement deuxième, entrée si la valeur du bit de sélection de colonne (PCi(0)) indique que la colonne de gauche, respectivement droite, contient le premier mot du triplet ;
- des moyens (3) de conservation des trois mots présents en sortie du quatrième multiplexeur, de façon à former le triplet de mots de n bits.

9. Dispositif selon l'une quelconque des revendications 5 à 8, **caractérisé en ce qu'**il comprend en outre des moyens de filtrage du triplet de mots de n bits, permettant de conserver :
- le premier des trois mots dudit triplet ; ou
- le premier et le second des trois mots dudit triplet ; ou
- les trois mots dudit triplet.

10. Dispositif selon l'une quelconque des revendications 5 à 9, **caractérisé en ce que** les mots de n bits sont des octets.

11. Micro-contrôleur **caractérisé en ce qu'**il comprend un dispositif d'accès selon l'une quelconque des revendications 5 à 10, ledit triplet de mots de n bits consécutifs contenant une instruction.
